# EUROPÄISCHE PATENTSCHRIFT

(11) **EP 2 983 898 B1**
(45) Veröffentlichungstag und Bekanntmachung des Hinweises auf die Patenterteilung: **15.03.2017**
(21) Anmeldenummer: 14727720.6
(22) Anmeldetag: 08.05.2014
(51) Int. Cl.: B29C 67/00, G05B 19/401, B22F 3/105, B29K 105/00, B33Y 10/00, B33Y 30/00

(54) **VERFAHREN ZUM AUTOMATISCHEN KALIBRIEREN EINER VORRICHTUNG ZUM GENERATIVEN HERSTELLEN EINES DREIDIMENSIONALEN OBJEKTS**
METHOD FOR AUTOMATIC CALIBRATION OF A DEVICE FOR GENERATIVE PRODUCTION OF A THREE-DIMENSIONAL OBJECT
PROCÉDÉ D'ÉTALONNAGE AUTOMATIQUE D'UN DISPOSITIF DE FABRICATION ADDITIVE D'UN OBJET TRIDIMENSIONNEL

(30) Priorität: 10.05.2013 DE 102013208651
(43) Veröffentlichungstag der Anmeldung: 17.02.2016
(73) Patentinhaber: EOS GmbH Electro Optical Systems, 82152 Krailling (DE)
(72) Erfinder: PERRET, Hans, 81543 München (DE); PHILIPPI, Jochen, 82166 Gräfelfing (DE)
(74) Vertreter: Prüfer & Partner mbB Patentanwälte · Rechtsanwälte
(86) Internationale Anmeldenummer: PCT/EP2014/059502
(87) Internationale Veröffentlichungsnummer: WO 2014/180971

(56) Entgegenhaltungen:
- EP-A1- 1 048 441
- EP-A2- 2 186 625
- DE-A1- 10 235 427
- US-A- 5 133 987

## Beschreibung

Die vorliegende Erfindung bezieht sich auf ein Verfahren zum automatischen Kalibrieren einer Vorrichtung zum generativen Herstellen eines dreidimensionalen Objekts sowie auf eine derartige Vorrichtung, die das Verfahren durchführt.

Aus der DE 43 02 418 A1 ist eine Vorrichtung zum generativen Herstellen eines Objekts bekannt, die eine Bestrahlungsvorrichtung mit mehreren Scannern aufweist. Die bekannte Vorrichtung verwendet mehrere Scanner, um durch Belichten eine Schicht an mehreren Stellen gleichzeitig den Zeitaufwand für die Herstellung des Objekts zu verringern.

Weiterhin ist es bekannt, zwei Scanner innerhalb einer Vorrichtung zu verwenden, die zwei nebeneinander liegende Scanfelder eines vergrößerten Baufelds abdecken, um größere Objekte herstellen zu können. Letzteres ist mit nur einem Scanner schwierig, da die Größe des Baufelds der Vorrichtung nicht beliebig groß sein kann.

Ein Verfahren zum Kalibrieren einer Vorrichtung zum Herstellen eines dreidimensionalen Objekts ist aus der DE 199 18 613 A1 bekannt, das jedoch nur für einen Scanner ausgelegt ist. Ferner ist das Verfahren vor dem eigentlichen Bauprozess durchzuführen.

Ein derartiges Verfahren zum Kalibrieren zweier in einer Vorrichtung zum Herstellen eines dreidimensionalen Objekts vorgesehener Mustererzeuger ist aus der EP 2 186 625 A2 bekannt. Hierbei wird ein von je einem Mustererzeuger generiertes Testmuster mit dem zu erwartenden Idealmuster verglichen.

Es ist die Aufgabe der vorliegenden Erfindung, ein Verfahren zum automatischen Kalibrieren einer Vorrichtung zum generativen Herstellen eines dreidimensionalen Objekts sowie eine derartige Vorrichtung dergestalt vorzusehen, dass die Vorrichtung auch große Objekte maßgenau und schnell herstellen kann.

Diese Aufgabe wird durch ein Verfahren zum automatischen Kalibrieren einer Vorrichtung zum generativen Herstellen eines dreidimensionalen Objekts mit den Merkmalen des Anspruchs 1 und durch eine Vorrichtung zum Herstellen eines dreidimensionalen Objekts mit den Merkmalen des Anspruchs 12 gelöst. Vorteilhafte Weiterbildungen sind Gegenstand der Unteransprüche.

Das Verfahren und die Vorrichtung weisen insbesondere den Vorteil auf, dass im Betriebszustand der Vorrichtung bzw. während des Bauprozesses eine automatische Überlappkorrektur von mindestens zwei Scanfeldern, welche mindestens zwei Bereichen im Baufeld zugeordnet sind, ermöglicht ist.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts, auf die die vorliegende Erfindung anwendbar ist; und
- Fig. 2: eine schematische Draufsicht eines Baufelds aus der Fig. 1 zur Erläuterung der vorliegenden Erfindung.

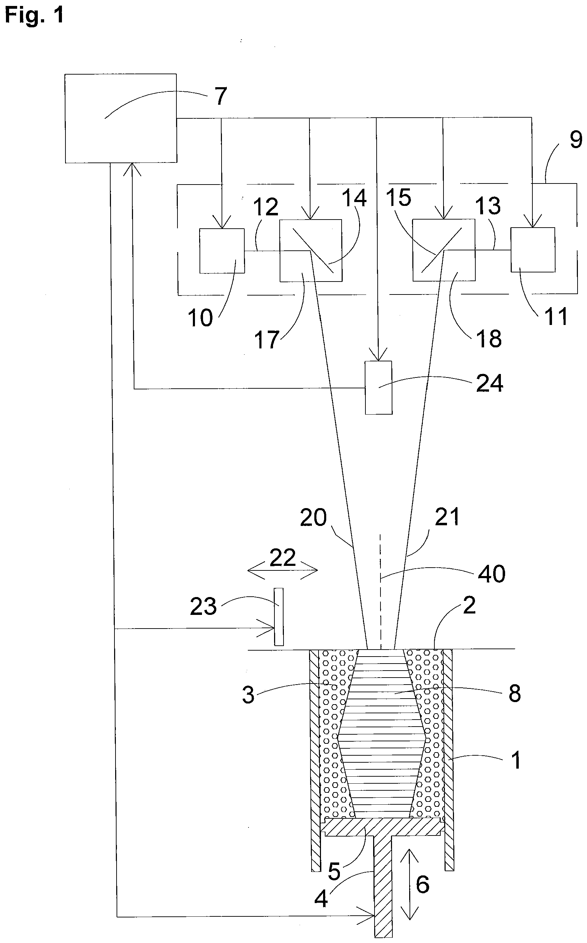

Die Fig. 1 zeigt eine schematische Ansicht einer Vorrichtung zum Herstellen eines dreidimensionalen Objekts, auf die die vorliegende Erfindung anwendbar ist. Im dargestellten Ausführungsbeispiel ist die Vorrichtung eine Lasersintermaschine.

Die Vorrichtung hat einen auf der Oberseite offenen Behälter 1, der innerhalb seines oberen Rands ein Baufeld 2 definiert. Der Behälter 1 kann als Wechselbehälter ausgeführt sein. Im Behälter 1 befindet sich ein Träger 5, der von einer Säule 4 getragen ist und mittels einer schematisch angedeuteten Höheneinstellvorrichtung 6 vertikal bewegbar ist.

Über dem Baufeld 2 ist ein Beschichter 23 mittels einer schematisch angedeuteten Verfahrvorrichtung 22 horizontal verfahrbar, der in bekannter Weise eine Schicht eines pulverförmigen Materials 3 mit definierter Höhe auf das Baufeld 2 oder auf eine zuvor zumindest selektiv verfestigte Schicht des Materials 3 über dem Baufeld 2 aufträgt.

Eine Bestrahlungsvorrichtung 9 zum Verfestigen der an dem Baufeld 2 angrenzenden obersten Schicht hat zumindest eine erste und eine zweite Strahlungsquelle 10, 11, die über eine (nicht dargestellte) Optik jeweils einen gebündelten bzw. gerichteten Strahl 12, 13 erzeugen. Die Strahlungsquellen 10, 11 sind vorzugsweise Lichtquellen wie zum Beispiel Laser.

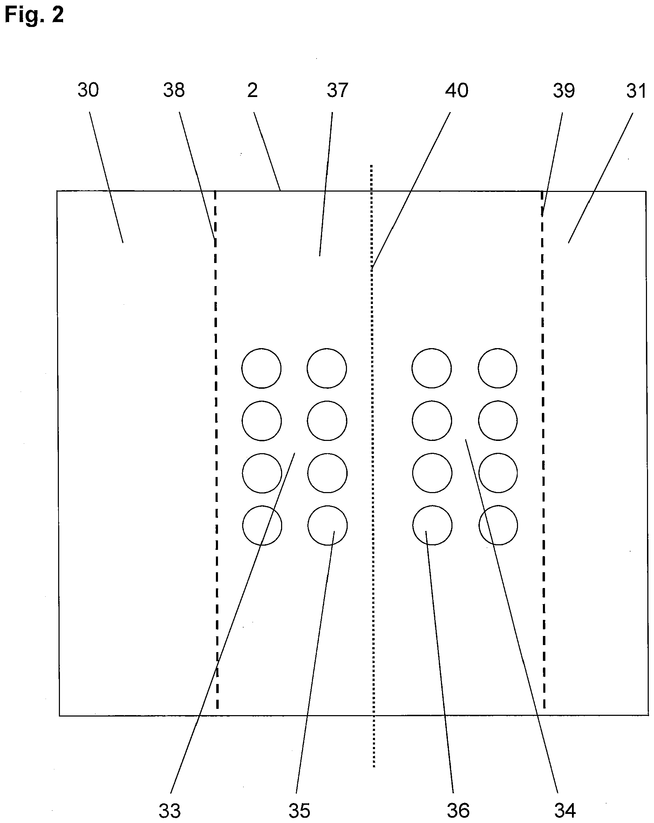

Im Bereich oberhalb des Behälters 1 bzw. des Baufelds 2 sind zumindest ein erster und ein zweiter Scanner 14, 15 angeordnet. Im dargestellten Ausführungsbeispiel sind die Scanner 14, 15 jeweils als Spiegel ausgeführt, die voneinander unabhängig kardanisch aufgehängt sind und mittels entsprechender Steuervorrichtungen 17, 18 geschwenkt werden können. Dabei wird der auf den ersten Scanner 14 auftreffende Strahl 12 reflektiert und als Strahl 20 auf ein in der Fig. 2 dargestelltes, erstes Scanfeld 30 im Baufeld 2 gelenkt, und der auf den zweiten Scanner 15 auftreffende Strahl 13 wird reflektiert und als Strahl 21 auf ein in der Fig. 2 dargestelltes, zweites Scanfeld 31 im Baufeld 2 gelenkt.

Das Bezugszeichen 24 in der Fig. 1 bezeichnet eine kalibrierte Kamera wie zum Beispiel eine CCD-Kamera oder eine Videokamera, die das Baufeld 2 erfassen kann. Wenn die Helligkeit der Umgebung zur Erfassung eines Bildes des Baufelds 2 zu gering ist, können auch (nicht dargestellte) Beleuchtungsvorrichtungen zum Erhellen des Baufelds vorgesehen sein.

Die Vorrichtung einschließlich den Steuervorrichtungen 17, 18 wird über eine Steuerung 7 gesteuert.

Zur Herstellung der ersten Schicht pulverförmigen Materials 3 steuert die Steuerung 7 die Höheneinstellvorrichtung 6 so, dass die Oberfläche des Trägers 5 auf eine der Dicke der Schicht entsprechenden, vorbestimmten Höhe unterhalb des Beschichters 23 positioniert wird. Dann wird mittels des Beschichters 23 die erste Schicht des pulverförmigen Materials 3 im Baufeld 2 aufgetragen.

Danach werden von der Steuerung 7 die Beleuchtungsvorrichtung 9 und die Steuervorrichtungen 17, 18 so gesteuert, dass der von jedem entsprechenden Scanner 14, 15 reflektierte Strahl 20, 21 auf vorbestimmte Punkte des Baufelds 2 auftrifft und diese verfestigt.

Nach der Herstellung der ersten Schicht wird die Höheneinstellvorrichtung 6 von der Steuerung 7 um den Betrag der vorgesehenen Dicke der zweiten Schicht abgesenkt und der Beschichter 23 trägt eine neue Pulverschicht im Baufeld 2 auf, um sie in ähnlicher Weise zu verfestigen. Dieser Vorgang wird wiederholt, bis das herzustellende Objekt 8 fertig gestellt ist.

Die beiden Scanner 14, 15 können in vorteilhafter Weise insgesamt ein relativ großes Baufeld 2 bestrahlen, so dass auch besonders große Objekte 8 hergestellt werden können. Es ist auch möglich, dass sich die Scanfelder 30, 31 der verschiedenen Scanner 14, 15 im Baufeld 2 in einem in der Fig. 2 gezeigten Überlappbereich 37 überlappen. Somit können aufgrund der gleichzeitigen Bestrahlung mittels der Strahlen 20, 21 mehrere Bereiche des Baufelds 2 gleichzeitig verfestigt werden, so dass die oberste Schicht des Objekts 8 trotz gleich bleibender Reaktionszeit des Materials 3 in einer verkürzten Zeit hergestellt wird.

Im Folgenden wird das Verfahren zum Kalibrieren der Vorrichtung zum generativen Herstellen des dreidimensionalen Objekts 8 beschrieben. Die Fig. 2 zeigt hierfür eine schematische Draufsicht des Baufelds 2 aus der Fig. 1 mit dem ersten Scanfeld 30, das von dem ersten Scanner 14 bestrahlt werden kann, und dem zweiten Scanfeld 31, das von dem zweiten Scanner 15 bestrahlt werden kann. Bei Betrachtung der Fig. 2 ist der erste Scanner 14 dem ersten Scanfeld 30 zugeordnet, und der zweite Scanner 15 ist dem zweiten Scanfeld 31 zugeordnet.

Zunächst wird eine im Baufeld 2 aufgetragene Schicht des Materials 3 durch den ersten Scanner 14 abgetastet, um ein erstes Testmuster 33 in dem Material 3 zu erzeugen. An den Stellen des Testmusters wird das Material durch die Einwirkung der Strahlung verfestigt. Alternativ ist es auch möglich, anstelle des aufgetragenen Materials 3 ein spezielles Target (nicht gezeigt) durch den ersten Scanner 14 zu bestrahlen, um ein erstes Testmuster in dem Target zu erzeugen. Das Target kann beispielsweise aus einer Metallplatte oder einer Folie gebildet sein oder aus einem Material wie zum Beispiel Photopapier, das auf die Strahlung der Scanner 14, 15 reagiert, so dass das Testmuster im Target verbleibt.

Im nächsten Schritt wird die aufgetragene Schicht des Materials 3 oder das Target durch den zweiten Scanner 15 bestrahlt, um ein zweites Testmuster 34 in dem Material 3 oder dem Target zu erzeugen.

Vorzugsweise ist das erste und/oder das zweite Testmuster 33, 34 ein Gittermuster mit einer bestimmten Gitterkonstante oder ein Punktmuster, um eine zuverlässige Kalibrierung zu ermöglichen. Im dargestellten Ausführungsbeispiel sind das erste und das zweite Testmuster 33, 34 jeweils Punktmuster, die aus vielen rasterförmig angeordneten Punkten 35, 36 bestehen. Vorzugsweise weisen das erste und das zweite Testmuster 33, 34 jeweils ein Teilmuster mit identischer Form auf. Es ist aber auch denkbar, dass das erste Testmuster 35 wie im dargestellten Ausführungsbeispiel vollständig identisch zum zweiten Testmuster 36 ist. Anschließend werden das erste und das zweite Testmusters 33, 34 durch die Kamera 24 erfasst. Dabei werden das erste und das zweite Testmuster 33, 34 zu dem ersten bzw. dem zweiten Scanner 14, 15 zugeordnet.

Gemäß der Erfindung wird das erste Testmuster 33 lediglich mit dem zweiten Testmuster 34 verglichen.

Eine relative Abweichung zwischen dem ersten Testmuster 33 und dem zweiten Testmuster 34 wird bestimmt.

Abschließend werden der erste und/oder der zweite Scanner 14, 15 derart kalibriert, dass die relative Abweichung zwischen dem ersten Testmuster 33 und dem zweiten Testmuster 34 einen Sollwert unterschreitet. Das Kalibrieren kann einen Versatz, eine Drehung, eine Skalierung oder eine Anpassung der Intensität oder Fokusform der elektromagnetischen Strahlung 20, 21 von dem ersten und/oder dem zweiten Scanner 14, 15 beinhalten. Als Abweichung kann daher zum Beispiel eine Abweichung der Gitterkonstante der Testmuster 33, 34, eine Abweichung der Position der Testmuster 33, 34 im Koordinatensystem, eine Abweichung der Orientierung der Testmuster 33, 34 im Koordinatensystem oder eine Abweichung der Größe der Testmuster 33, 34 in Frage kommen. Vorzugsweise kann das Kalibrieren mittels eines Autokorrelationsalgorithmus, eines Matching-Verfahrens oder eines anderen, aus dem Stand der Technik hinreichend bekannten Verfahrens durchgeführt werden. Sofern das erste Testmuster 33 mit dem zweiten Testmuster 34 verglichen wurde, ist vorzugsweise einer der beiden Scanner 14, 15 fest eingestellt, während nur der andere der beiden Scanner 14, 15 so kalibriert wird, dass die relative Abweichung zwischen dem ersten und dem zweiten Testmuster 33, 34 den Sollwert unterschreitet.

Durch Vergleichen der beiden Testmuster miteinander können relative Fehler wie Versatz oder Drehung der Testmuster zueinander erkannt und korrigiert werden, und es eine relative Kalibrierung der beiden Scanner zueinander kann erfolgen. Durch Vergleichen der beiden Testmuster mit einem gespeicherten Referenzmuster kann zusätzlich eine Abweichung der Skalierung erkannt und korrigiert werden, es eine absolute Kalibrierung der beiden Scanner kann erfolgen.

Vorzugsweise können sich das erste und das zweite Scanfeld 30, 31 gegenseitig im Baufeld 2 in dem Überlappbereich 37 überlappen, wie dies in der Fig. 2 dargestellt ist. Das Bezugszeichen 38 zeigt auf eine gestrichelte Linie, die eine linke Grenze des zweiten Scanfelds 31 darstellt, das durch den zweiten Scanner 15 bestrahlt werden kann. Das Bezugszeichen 39 zeigt auf eine gestrichelte Linie, die eine rechte Grenze des ersten Scanfelds 30 darstellt, das durch den ersten Scanner 14 bestrahlt werden kann. Das Bezugszeichen 40 in den Figuren 1 und 2 zeigt auf eine gepunktete Linie, die in etwa eine Mittellinie des Überlappbereichs 37 darstellt.

Die Nutzung des Überlappbereichs 37 ist besonders dann vorteilhaft, wenn der Herstellungsprozess beschleunigt werden soll, da der erste und der zweite Scanner 14, 15 gleichzeitig im Überlappbereich 37 arbeiten. Vorzugsweise werden dann das erste und das zweite Testmuster 33, 34 paarweise im Überlappbereich 37 erzeugt. Im dargestellten Ausführungsbeispiel sind das erste und das zweite Testmuster 33, 34 durch die Mittellinie 40 getrennt. Gute Kalibrierergebnisse können erzielt werden, wenn sich das erste Testmuster 33 näher am zweiten Scanner 15 befindet als das zweite Testmuster 34. In umgekehrter Weise sollte sich dann auch das zweite Testmuster 34 näher am ersten Scanner 14 befinden als das erste Testmuster 33. In diesem Fall würde der erste Scanner 14 das Testmuster 34 in der Fig. 2 erzeugen, und der zweite Scanner 15 würde das Testmuster 33 in der Fig. 2 erzeugen.

Das erfindungsgemäße Verfahren kann insbesondere "in-situ" während der Herstellung des dreidimensionalen Objekts 8 durchgeführt werden. Auf diese Weise können etwaige Abweichungen der Scanner 14, 15 während des Bauprozesses in Echtzeit beseitigt werden. Außerdem können die Testmuster 33, 34 auch Bestandteil des realen Objektes 8 sein. Alternativ kann das erfindungsgemäße Verfahren auch während der Aufheizphase der Vorrichtung oder am Ende des Herstellungsprozesses als Endkontrolle durchgeführt werden.

In vorteilhafter Weise ist es durch die Kalibrierung der Scanner 14, 15 möglich, auch große Objekte 8 in einem entsprechend großem Baufeld 2 maßgenau herzustellen.

Im dargestellten Ausführungsbeispiel ist das Baufeld 2 in zwei Scanfelder 30, 31 geteilt, die jeweils durch einen zugeordneten Scanner 14, 15 bestrahlt werden. In einer Weiterbildung kann das Baufeld 2 in vier gleiche Scanfeldern geteilt sein, die jeweils durch einen zugeordneten Scanner bestrahlt werden. Im Prinzip ist eine beliebige Mehrzahl von Scannern und von diesen zugeordneten Scanfeldern möglich, die ein Baufeld abdecken.

Anstelle von zwei oder mehr getrennten Strahlungsquellen 10, 11 für die Mehrzahl von Scannern 14, 15 kann auch lediglich eine Strahlungsquelle vorgesehen sein, aus der über einen oder mehrere Strahlteiler die zwei oder mehr gebündelten bzw. gerichteten Strahlen 12, 13 erzeugt werden.

Die Erfindung wurde für eine Lasersintervorrichtung beschrieben, bei der als Strahlungsquelle ein Laser 11 verwendet wurde. Jede andere Strahlungsquelle ist aber auch denkbar, mit der eine elektromagnetische oder Teilchenstrahlung in das pulverförmige Aufbaumaterial eingebracht werden kann. So kann zum Beispiel eine Strahlungsquelle für inkohärente Lichtstrahlung, für IR-Strahlung, für Röntgenstrahlung oder für Elektronenstrahlung als Strahlungsquelle verwendet werden. Dementsprechend ist ein pulverförmiges Aufbaumaterial zu verwenden, das mit der jeweiligen Strahlung verfestigt werden kann. Die Erfindung ist demnach nicht nur auf Lasersintern anwendbar, sondern auf alle pulverbasierten, generativen Verfahren, bei denen ein Werkstoff bzw. ein Pulvermaterial verwendet wird, welches durch den Energiestrahl verfestigt wird. Das erfindungsgemäße Verfahren eignet sich hierbei besonders für Kunststoffpulver, da die Anforderungen hinsichtlich der Kameraauflösung geringer sind als zum Beispiel bei Metallpulver. Die Vorrichtung zum Herstellen eines dreidimensionalen Objekts kann auch eine Laserschmelzvorrichtung oder eine Vorrichtung mit Maskenbelichtung sein.

## Patentansprüche

1. Verfahren zum automatischen Kalibrieren einer Vorrichtung zum generativen Herstellen eines dreidimensionalen Objekts (8), wobei die Vorrichtung Folgendes aufweist:
ein Baufeld (2), in dem das Objekt (8) durch selektives Verfestigen eines pulverförmigen Materials (3) schichtweise aufzubauen ist,
eine Bestrahlungsvorrichtung (9) zum Ausstrahlen einer elektromagnetischen Strahlung (20, 21) auf selektive Bereiche der aufgetragenen Schicht des Materials (3), wobei die Bestrahlungsvorrichtung (9) zumindest einen ersten und einen zweiten Scanner (14, 15) aufweist und der erste Scanner (14) ein erstes Scanfeld (30) im Baufeld (2) bestrahlt und der zweite Scanner (15) ein zweites Scanfeld (31) im Baufeld (2) bestrahlt; und
eine Steuereinheit (7) zum Steuern der Vorrichtung, mit den Schritten:
Bestrahlen einer aufgetragenen Schicht des Materials (3) oder eines Targets durch den ersten Scanner (14), um ein erstes Testmuster (33) in dem Material (3) oder dem Target zu erzeugen;
Bestrahlen der aufgetragenen Schicht des Materials (3) oder des Targets durch den zweiten Scanner (15), um ein zweites Testmuster (34) in dem Material (3) oder dem Target zu erzeugen;
Erfassen des ersten und des zweiten Testmusters (33, 34) durch eine Kamera (24) und Zuordnen des ersten und des zweiten Testmusters (33, 34) zu dem ersten bzw. zweiten Scanner (14, 15); **gekennzeichnet durch** die folgenden Schritte:
Vergleichen des ersten und des zweiten Testmusters (33, 34) miteinander;
Bestimmen einer relativen Abweichung zwischen dem ersten Testmuster (33) und dem zweiten Testmuster (34);
Kalibrieren des ersten und/oder des zweiten Scanners (14, 15) derart, dass die relative Abweichung zwischen dem ersten Testmuster (33) und dem zweiten Testmuster (34) einen Sollwert unterschreitet.

2. Verfahren gemäß Anspruch 1,
wobei sich das erste und das zweite Scanfeld (30, 31) gegenseitig im Baufeld (2) in einem Überlappbereich (37) überlappen.

3. Verfahren gemäß Anspruch 2,
wobei das erste und das zweite Testmuster (33, 34) paarweise im Überlappbereich (37) erzeugt werden.

4. Verfahren gemäß Anspruch 2 oder 3,
wobei sich das erste Testmuster (33) näher am zweiten Scanner (15) befindet als das zweite Testmuster (34).

5. Verfahren gemäß einem der vorherigen Ansprüche,
wobei das erste und/oder das zweite Testmuster (33, 34) ein Gittermuster oder ein Punktmuster ist.

6. Verfahren gemäß einem der vorherigen Ansprüche,
wobei das erste und das zweite Testmuster (33, 34) jeweils ein Teilmuster mit identischer Form aufweisen.

7. Verfahren gemäß einem der vorherigen Ansprüche,
wobei das Kalibrieren einen Versatz, eine Drehung, eine Skalierung oder eine Anpassung der Intensität oder der Fokusform der elektromagnetischen Strahlung (20, 21) von dem ersten und/oder dem zweiten Scanner (14, 15) beinhaltet.

8. Verfahren gemäß einem der vorherigen Ansprüche,
wobei das Kalibrieren mittels eines Autokorrelationsalgorithmus oder eines Matching-Verfahrens durchgeführt wird.

9. Verfahren gemäß einem der vorherigen Ansprüche,
wobei das Kalibrieren während der Herstellung des dreidimensionalen Objekts (8) durchgeführt wird.

10. Verfahren gemäß einem der vorherigen Ansprüche,
wobei das pulverförmige Material (3) ein Metallpulver ist.

11. Verfahren gemäß einem der Ansprüche 1 bis 9,
wobei das pulverförmige Material (3) ein Kunststoffpulver ist.

12. Vorrichtung zum generativen Herstellen eines dreidimensionalen Objekts (8), wobei die Vorrichtung Folgendes aufweist:
einen Behälter (1), an dessen oberen Rand ein Baufeld (2) definiert ist, in dem das Objekt (8) durch selektives Verfestigen eines pulverförmigen Materials (3) schichtweise aufzubauen ist,
eine Bestrahlungsvorrichtung (9) zum Ausstrahlen einer elektromagnetischen Strahlung (20, 21) auf selektive Bereiche einer aufgetragenen Schicht des Materials (3), wobei die Bestrahlungsvorrichtung (9) zumindest einen ersten und einen zweiten Scanner (14, 15) aufweist und der erste Scanner (14) ein erstes Scanfeld (30) im Baufeld (2) bestrahlt und der zweite Scanner (15) ein zweites Scanfeld (31) im Baufeld (2) bestrahlt,
eine Kamera (24) zum Erfassen des Baufelds (2); und
eine Steuereinheit (7), wobei die Steuereinheit (7)
den ersten Scanner (14) zum Bestrahlen einer aufgetragenen Schicht des Materials (3) oder eines Targets veranlasst, um ein erstes Testmuster (33) in dem Material (3) oder dem Target zu erzeugen;
den zweiten Scanner (15) zum Bestrahlen der aufgetragenen Schicht des Materials (3) oder des Targets veranlasst, um ein zweites Testmuster (34) in dem Material (3) oder dem Target zu erzeugen;
die Kamera (24) zum Erfassen des ersten und des zweiten Testmusters (33, 34) veranlasst;
das erste und das zweite Testmusters (33, 34) zu dem ersten und zweiten Scanner (14, 15) zuordnet; **dadurch gekennzeichnet, dass** die Steuereinheit das erste und das zweite Testmuster (33, 34) miteinander vergleicht;
eine relative Abweichung zwischen dem ersten Testmuster (33) und dem zweiten Testmuster (34) bestimmt; und
den ersten und/oder den zweiten Scanner (14, 15) derart kalibriert, dass die relative Abweichung zwischen dem ersten Testmuster (33) und dem zweiten Testmuster (34) einen Sollwert unterschreitet.

13. Vorrichtung gemäß Anspruch 12, des Weiteren mit einem Beschichter (23) zum Auftragen einer Schicht (8a-d) eines pulverförmigen Materials (3) auf das Baufeld (2) oder auf eine zuvor zumindest selektiv verfestigte Schicht des Materials (3) über dem Baufeld (2).

14. Vorrichtung gemäß Anspruch 12 oder 13, bei der
der erste und der zweite Scanner (14, 15) beide eine eigene Strahlenquelle enthalten, vorzugsweise einen Laser.

15. Vorrichtung gemäß Anspruch 12 oder 13, bei der
der erste und der zweite Scanner (14, 15) eine gemeinsame Strahlenquelle enthalten, vorzugsweise einen Laser, und
der Strahl über eine Strahlteilervorrichtung auf die beiden Scanner aufgeteilt wird.

## Claims

1. A Method for automatically calibrating a device for generatively producing a three-dimensional object (8), wherein the device comprises the following:
a build area (2), in which the object (8) is to be constructed layer by layer by selective solidification of a pulverulent material (3),
an irradiation device (9) for emitting electromagnetic radiation (20, 21) onto selective areas of the applied layer of the material (3), wherein the irradiation device (9) comprises at least a first and a second scanner (14, 15), and the first scanner (14) irradiates a first scan field (30) in the build area (2), and the second scanner (15) irradiates a second scan field (31) in the build area (2); and
a control unit (7) for controlling the device,
with the steps:
irradiating an applied layer of the material (3) or a target by means of the first scanner (14) in order to produce a first test pattern (33) in the material (3) or the target;
irradiating the applied layer of the material (3) or the target by means of the second scanner (15) in order to produce a second test pattern (34) in the material (3) or the target;
detecting the first and second test patterns (33, 34) by means of a camera (24) and assigning the first and second test patterns (33, 34) to the first and second scanners (14, 15), respectively;
**characterized by** the following steps:
comparing the first and second test patterns (33, 34) with one another;
determining a relative deviation between the first test pattern (33) and the second test pattern (34);
calibrating the first and/or the second scanner (14, 15) in such a way that the relative deviation between the first test pattern (33) and the second test pattern (34) falls below a setpoint value.

2. The method according to claim 1,
wherein the first and second scan fields (30, 31) overlap each other in an overlap area (37) in the build area (2).

3. The method according to claim 2,
wherein the first and second test patterns (33, 34) are produced pairwise in the overlap area (37).

4. The method according to claim 2 or 3,
wherein the first test pattern (33) is situated closer to the second scanner (15) than the second test pattern (34).

5. The method according to any of the preceding claims,
wherein the first and/or the second test pattern (33, 34) are/is a lattice pattern or a point pattern.

6. The method according to any of the preceding claims,
wherein the first and second test patterns (33, 34) in each case have a partial pattern having an identical shape.

7. The method according to any of the preceding claims,
wherein the calibrating comprises an offset, a rotation, a scaling, or an adjustment of the intensity or of the focus shape of the electromagnetic radiation (20, 21) of the first and/or the second scanner (14, 15).

8. The method according to any of the preceding claims,
wherein the calibrating is carried out by means of an autocorrelation algorithm or a matching method.

9. The method according to any of the preceding claims,
wherein the calibrating is carried out during the production of the three-dimensional object (8).

10. The method according to any of the preceding claims,
wherein the pulverulent material (3) is a metal powder.

11. The method according to any of claims 1 to 9,
wherein the pulverulent material (3) is a plastic powder.

12. Device for generatively producing a three-dimensional object (8), wherein the device comprises the following:
a container (1), at the upper edge of which a build area (2) is defined, in which the object (8) is to be constructed layer by layer by selective solidification of a pulverulent material (3),
an irradiation device (9) for emitting electromagnetic radiation (20, 21) onto selective areas of an applied layer of the material (3), wherein the irradiation device (9) comprises at least a first and a second scanner (14, 15), and the first scanner (14) irradiates a first scan field (30) in the build area (2), and the second scanner (15) irradiates a second scan field (31) in the build area (2),
a camera (24) for detecting the build area (2); and
a control unit (7), wherein the control unit (7)
causes the first scanner (14) to irradiate an applied layer of the material (3) or a target in order to produce a first test pattern (33) in the material (3) or the target;
causes the second scanner (15) to irradiate the applied layer of the material (3) or the target in order to produce a second test pattern (34) in the material (3) or the target;
causes the camera (24) to detect the first and second test patterns (33, 34);
assigns the first and second test patterns (33, 34) to the first and second scanners (14, 15);
**characterized in that** the control unit
compares the first and second test patterns (33, 34) with one another;
determines a relative deviation between the first test pattern (33) and the second test pattern (34); and
calibrates the first and/or the second scanner (14, 15) in such a way that the relative deviation between the first test pattern (33) and the second test pattern (34) falls below a setpoint value.

13. Device according to claim 12, further comprising a coater (23) for applying a layer (8a-d) of a pulverulent material (3) onto the build area (2) or onto a previously at least selectively solidified layer of the material (3) above the build area (2).

14. Device according to claim 12 or 13, wherein
the first and second scanners (14, 15) both contain a separat radiation source, preferably a laser.

15. Device according to claim 12 or 13, wherein
the first and second scanners (14, 15) contain a common radiation source, preferably a laser, and
the beam is split between the two scanners by means of a beam splitter device.

## Revendications

1. Procédé d'étalonnage automatique d'un dispositif destiné à la fabrication générative d'un objet tridimensionnel (8), le dispositif possédant les éléments suivantes :
un champ de construction (2), dans lequel l'objet (8) doit être construit couche par couche par solidification sélective d'un matériau en poudre (3),
un dispositif d'irradiation (9) destiné à émettre un rayonnement électromagnétique (20, 21) sur des zones sélectives de la couche appliquée du matériau (3), le dispositif d'irradiation (9) possédant au moins un premier et un deuxième dispositif de balayage (14, 15),
et le premier dispositif de balayage (14) irradiant un premier champ de balayage (30) dans le champ de construction (2), et le deuxième dispositif de balayage (15) irradiant un deuxième champ de balayage (31) dans le champ de construction (2) ; et
une unité de commande (7) destinée à commander le dispositif, comprenant les étapes suivantes :
irradiation d'une couche appliquée du matériau (3) ou d'une cible par le premier dispositif de balayage (14) afin de produire un premier modèle d'essai (33) dans le matériau (3) ou la cible ;
irradiation de la couche appliquée du matériau (3) ou de la cible par le deuxième dispositif de balayage (15) afin de produire un deuxième modèle d'essai (34) dans le matériau (3) ou la cible ;
saisie du premier et du deuxième modèle d'essai (33, 34) par une caméra (24) et affectation du premier et du deuxième modèle d'essai (33, 34) respectivement au premier et au deuxième dispositif de balayage (14, 15) ;
**caractérisé par** les étapes suivantes :
comparaison du premier et du deuxième modèle d'essai (33, 34) l'un avec l'autre ;
détermination d'un écart relatif entre le premier modèle d'essai (33) et le deuxième modèle d'essai (34) ;
étalonnage du premier et/ou du deuxième dispositif de balayage (14, 15) de telle sorte que l'écart relatif entre le premier modèle d'essai (33) et le deuxième modèle d'essai (34) soit inférieur à une valeur de consigne.

2. Procédé selon la revendication 1,
le premier et le deuxième champ de balayage (30, 31) se chevauchant mutuellement dans une zone de chevauchement (37) dans le champ de construction (2).

3. Procédé selon la revendication 2,
le premier et le deuxième modèle d'essai (33, 34) étant produits par paire dans la zone de chevauchement (37).

4. Procédé selon les revendications 2 ou 3,
le premier modèle d'essai (33) se trouvant plus proche du deuxième dispositif de balayage (15) que le deuxième modèle d'essai (34).

5. Procédé selon l'une des revendications précédentes,
le premier et/ou le deuxième modèle d'essai (33, 34) étant un modèle en grille ou un modèle à points.

6. Procédé selon l'une des revendications précédentes,
le premier et le deuxième modèle d'essai (33, 34) possédant respectivement un modèle partiel de forme identique.

7. Procédé selon l'une des revendications précédentes,
l'étalonnage comprenant un décalage, une rotation, une mise à l'échelle ou une adaptation de l'intensité ou de la forme du foyer du rayonnement électromagnétique (20, 21) du premier et/ou du deuxième dispositif de balayage (14, 15).

8. Procédé selon l'une des revendications précédentes,
l'étalonnage étant réalisé au moyen d'un algorithme d'auto-corrélation ou d'un procédé d'appariement.

9. Procédé selon l'une des revendications précédentes,
l'étalonnage étant réalisé pendant la fabrication de l'objet tridimensionnel (8).

10. Procédé selon l'une des revendications précédentes,
le matériau en poudre (3) étant une poudre métallique.

11. Procédé selon l'une des revendications 1 à 9,
le matériau en poudre (3) étant une poudre de matière plastique.

12. Dispositif de fabrication générative d'un objet tridimensionnel (8), le dispositif possédant les éléments suivants :
un récipient (1), sur le bord supérieur duquel est défini un champ de construction (2), dans lequel l'objet (8) doit être construit couche par couche par solidification sélective d'un matériau en poudre (3),
un dispositif d'irradiation (9) destiné à émettre un rayonnement électromagnétique (20, 21) sur des zones sélectives d'une couche appliquée du matériau (3), le dispositif d'irradiation (9) possédant au moins un premier et un deuxième dispositif de balayage (14, 15), et le premier dispositif de balayage (14) irradiant un premier champ de balayage (30) dans le champ de construction (2), et le deuxième dispositif de balayage (15) irradiant un deuxième champ de balayage (31) dans le champ de construction (2),
une caméra (24) destinée à détecter le champ de construction (2) ; et
une unité de commande (7), l'unité de commande (7)
amenant le premier dispositif de balayage (14) à irradier une couche appliquée du matériau (3) ou une cible afin de produire un premier modèle d'essai (33) dans le matériau (3) ou la cible ;
amenant le deuxième dispositif de balayage (15) à irradier la couche appliquée du matériau (3) ou la cible afin de produire un deuxième modèle d'essai (34) dans le matériau (3) ou la cible ;
amenant la caméra (24) à saisir le premier et le deuxième modèle d'essai (33, 34) ;
affectant le premier et le deuxième modèle d'essai (33, 34) au premier et au deuxième dispositif de balayage (14, 15) ;
**caractérisé en ce que** l'unité de commande compare le premier et le deuxième modèle d'essai (33, 34) l'un avec l'autre ;
détermine un écart relatif entre le premier modèle d'essai (33) et le deuxième modèle d'essai (34) ;
et
étalonne le premier et/ou le deuxième dispositif de balayage (14, 15) de telle sorte que l'écart relatif entre le premier modèle d'essai (33) et le deuxième modèle d'essai (34) soit inférieur à une valeur de consigne.

13. Dispositif selon la revendication 12, comprenant en outre une coucheuse (23) destinée à appliquer une couche (8a-d) d'un matériau en poudre (3) sur le champ de construction (2) ou sur une couche du matériau (3) préalablement solidifiée au moins de manière sélective sur le champ de construction (2).

14. Dispositif selon la revendication 12 ou 13, selon
lequel
le premier et le deuxième dispositif de balayage (14, 15) contiennent tous deux une source de rayonnement propre, de préférence un laser.

15. Dispositif selon la revendication 12 ou 13, selon
lequel
le premier et le deuxième dispositif de balayage (14, 15) contiennent une source de rayonnement commune, de préférence un laser, et
le rayon est réparti entre les deux dispositifs de balayage au moyen d'un dispositif diviseur de faisceau.
